# EUROPEAN PATENT SPECIFICATION

(11) **EP 0 514 040 B1**
(45) Date of publication and mention of the grant of the patent: **19.06.1996**
(21) Application number: 92303874.9
(22) Date of filing: 29.04.1992
(51) Int. Cl.: F02B 33/34, F01C 21/08

(54) **Rotors for mechanically-driven superchargers**
Rotor für mechanisch angetriebenen Auflader
Rotors pour compresseurs de suralimentation à commande mécanique

(30) Priority: 14.05.1991 JP 136942/91
(43) Date of publication of application: 19.11.1992
(73) Proprietor: ISHIKAWAJIMA-HARIMA JUKOGYO KABUSHIKI KAISHA, Tokyo-to 100 (JP)
(72) Inventor: Tanaka, Yasuo, Chiba-ken 260 (JP); Takei, Nobuo, Tokyo-to 164 (JP)
(74) Representative: Jennings, Nigel Robin

(56) References cited:
- PATENT ABSTRACTS OF JAPAN vol. 13, no. 577 (M-910)20 December 1989 & JP-A-1 241 375
- PATENT ABSTRACTS OF JAPAN vol. 8, no. 177 (M-317)(1614) 15 August 1984 & JP-A-59 068 586
- PATENT ABSTRACTS OF JAPAN vol. 9, no. 92 (M-373)20 April 1985 & JP-A-59 218 286
- PATENT ABSTRACTS OF JAPAN vol. 10, no. 37 (M-453)14 February 1986 & JP-A-60 190 601
- PATENT ABSTRACTS OF JAPAN vol. 14, no. 271 (M-983)12 June 1990 & JP-A-2 078 734

## Description

The present invention relates to rotors of mechanically-driven superchargers for use with internal combustion engines for increasing their output power and to a method of making such rotors.

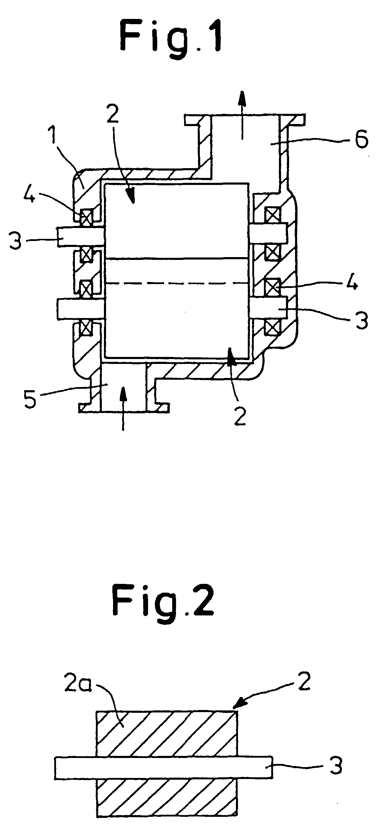

Figure 1 is a schematic sectional view of a conventional mechanically-driven supercharger for generating a supercharging pressure to be supplied to an engine comprising a casing 1 which accommodates a male and a female rotor 2 which are in mesh with and extend parallel to one another. Each rotor 2 has a shaft 3 whose opposite ends are supported by bearings 4. Rotational force is transmitted from the engine to the shafts 3 to rotate the rotors 2, whereby air introduced through an air intake 5 at one axial end of the casing 1 is compressed and discharged into the engine through a discharge port 6 at the other axial end of the casing 1.

The rotor 2 in the supercharger described above is, for instance, a so-called integrated ferrous rotor which comprises a rotor barrel integral with a shaft, both of which are made of ferrous metal such as carbon steel. Since the ferrous rotor is very heavy, a rotor of the type as shown in Figure 2 has been recently proposed which comprises a rotor barrel 2a and a shaft 3 which are separate components. The rotor barrel 2a is made of non-ferrous metal such as aluminium alloy into which the shaft 3 is shrink-fitted. It would be conceiveable as regards the desirable low weight of the rotor assembly that the shaft also be made of non-ferrous metal and made integral with the rotor barrel 2. However, in fact, the shaft 3 must be made of ferrous metal in order that it can transmit the necessary power and for preventing distortion of the bearings resulting from thermal expansion thereof.

In the rotor 2 shown in Figure 2, whose rotor barrel 2a and shaft 3 are made of aluminium alloy and carbon steel, respectively, a large shrinkage is required to securely assemble the rotor barrel 2a with the shaft 3 because of the great difference between the coefficient of linear thermal expansion of aluminium of 20-23 (x 10⁻⁶°C) and that of carbon steel of 11-13 (x 10⁻⁶/°C). When the fit between the two is too close, not only do the contact stresses between the rotor barrel 2a and the shaft 3 increase but also the rotor barrel 2a may be distorted due to differences in the thermal expansions so that the problem may arise that the clearance between the intermeshed rotors 2 cannot be maintained with the desired degree of accuracy. On the other hand, when the fit is too loose, the problem may arise that the rotor barrel 2a does not rotate in synchronism with the shaft 3 due to the differences in thermal expansion. As a result, such rotors are extremely difficult to produce and their production costs are considerably increased.

JP-A-1-241375 discloses connecting a steel shaft to a titanium alloy rotor body by friction welding with the interposition of a cap of silver or copper between the rotor body and each shaft. Silver and copper have higher thermal expansivities than steel or titanium alloys.

JP-A-59-68586 describes a compressor rotor comprising a rotor barrel of aluminium with a central bore into each end of which a steel shaft is inserted and secured by a cold plastic joining method. The preamble of Claim 4 is based on this document.

According to the present invention a method of manufacturing a rotor for a mechanically-driven supercharger comprises the steps of fabricating a rotor barrel of aluminium alloy, the rotor barrel being solid and having a pair of integral shaft-coupling projections extending coaxially with each other from respective end surfaces of the rotor barrel, fabricating a pair of short rotor shafts made of carbon steel, the coefficient of linear thermal expansion of said rotor shafts being less than that of said rotor barrel, interposing a member between each shaft-coupling projection and associated rotor shaft, the coefficient of linear thermal expansion of said member being substantially intermediate those of each projection and its joined rotor shaft and abutting and joining by welding an inner end of each rotor shaft to a free end of a respective shaft-coupling projection through said member.

The invention also embraces a rotor for a mechanically-driven supercharger including a solid rotor barrel of aluminium alloy and a rotor shaft of carbon steel extending coaxially from each end thereof, characterised in that the rotor barrel has an integral coaxial shaft-coupling projection of aluminium alloy at each end and that one end of a respective rotor shaft is connected to the free end of each shaft-coupling projection, the coefficient of linear thermal expansion of said rotor shafts being less than that of said rotor barrel, a member with a coefficient of linear thermal expansion which is between those of the shaft-coupling projection and the rotor shafts being interposed between each shaft-coupling projection and the associated rotor shaft and connected thereto by welding.

Thus in the rotor in accordance with the invention the junction between the aluminium alloy and the carbon steel does not occur at the end surfaces of the rotor barrel but instead occurs intermediate the ends of the shafts extending from the ends of the barrel which means that the adverse effect resulting in the prior art from the difference in expansion between the rotor barrel and the shafts is substantially eliminated. Because a member whose linear thermal expansion is between those of the aluminium alloy and carbon steel is interposed between each stub shaft and associated rotor shaft and connected thereto, the differential thermal expansion across each connection is reduced and the welding process is thereby facilitated.

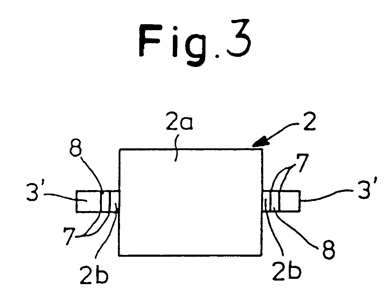

Further features and details of the present invention will be apparent from the following description of a specific embodiment which is given by way of example with reference to Figure 3 of the accompanying drawings, which is a schematic view of the embodiment.

Referring to Figure 3, the rotor barrel 2a is made of aluminium alloy and is in the form of a solid cylinder. A relatively short shaft-coupling projection or stub shaft 2b extends coaxially from each end surface of the rotor barrel 2a. The diameter of the projections 2b is substantially equal to that of rotor shafts 3' which are made of carbon steel and are relatively short. The shafts 3' are coaxially abutted against the free end surface of a respective projection 2b with the interposition of a further member 8 made of, for instance, austenitic stainless steel whose coefficient of linear expansion is between those of the projections 2b and the shafts 3'. The members are connected together at 7 by electron-beam or friction welding to form the rotor 2.

The projections 2b may be in the form of solid or hollow cylinders.

The coefficient of linear thermal expansion of the austenitic stainless steel is 16-18 (x 10⁻⁶/°C) which is between those of the projections 2b and the shafts 3', that is to say between 20-23 (x 10⁻⁶/°C) and 11-13 (x 10⁻⁶/°C) so that the difference in the coefficients of linear thermal expansion at any one joint is reduced. Welding is thereby facilitated.

The manufacture of rotors is thus much facilitated and production costs can be substantially reduced. In contrast to the case in which the rotor barrel and the shaft are shrink-fitted together, the adverse effects of substantial stresses and of differential thermal expansion can be substantially eliminated. Since the rotor is made of only aluminium alloy, its weight and its moment of inertia is minimised so that the starting torque of the rotor is decreased.

It will be understood that, for instance, two or more members 8 may be interposed between the projections 2b and the shafts 3'.

## Claims

1. A method of manufacturing a rotor for a mechanically-driven supercharger comprising the steps of fabricating a rotor barrel of aluminium alloy, the rotor barrel (2a) being solid and having a pair of integral shaft-coupling projections (2b) extending coaxially with each other from respective end surfaces of the rotor barrel, fabricating a pair of short rotor shafts (3') made of carbon steel, the coefficient of linear thermal expansion of said rotor shafts (3') being less than that of said rotor barrel (2a), interposing a member (8) between each shaft-coupling projection (2b) and associated rotor shaft (3'), the coefficient of linear thermal expansion of said member (8) being between those of each shaft-coupling projection (2b) and its joined rotor shaft (3') and abutting and joining by welding an inner end of each rotor shaft (3') to a free end of a respective shaft-coupling projection (2b) through said member (8).

2. A method as claimed in Claim 1 wherein said interposed member (8) comprises austenitic stainless steel.

3. A method as claimed in Claim 1 or Claim 2 characterised in that the connecting processes are effected by electron beam or friction welding.

4. A rotor for a mechanically-driven supercharger including a solid rotor barrel (2a) of aluminium alloy and a rotor shaft (3') of carbon steel extending coaxially from each end thereof, characterised in that the rotor barrel (2a) has an integral coaxial shaft-coupling projection (2b) of aluminium alloy at each end and that one end of a respective rotor shaft (3') is connected to the free end of each shaft-coupling projection (2b), the coefficient of linear thermal expansion of said rotor shafts (3') being less than that of said rotor barrel (2a), a member (8) with a coefficient of linear thermal expansion which is between those of the shaft-coupling projection (2b) and the rotor shafts (3') being interposed between each shaft-coupling projection (2b) and the associated rotor shaft (3') and connected thereto by welding.

5. A rotor as claimed in Claim 4 characterised in that the said interposed member (8) comprises austenitic stainless steel.

## Patentansprüche

1. Verfahren zum Herstellen eines Rotors für einen mechanisch angetriebenen Auflader, umfassend die folgenden Schritte:
Herstellen einer Rotortrommel aus einer Aluminiumlegierung, wobei die Rotortrommel (2a) massiv ist und ein Paar von fest mit ihr verbundenen Wellenkupplungs-Vorsprüngen (2b) aufweist, die sich koaxial zueinander von entsprechenden Endoberflächen der Rotortrommel aus erstrecken,
Herstellen eines Paares von kurzen Rotorwellen (3') aus kohlenstoffhaltigem Stahl, wobei der lineare thermische Ausdehnungskoeffizient dieser Rotorwellen (3') niedriger ist als jener der Rotortrommel (2a),
Zwischenfügen eines Bauteils (8) zwischen jeden Wellenkupplungs-Vorsprung (2b) und die zugeordnete Rotorwelle (3'), wobei der lineare thermische Ausdehnungskoeffizient dieses Bauteils (8) zwischen dem jedes Wellenkupplungs-Vorsprunges (2b) und dem der mit ihm verbundenen Rotorwelle (3') liegt, und
Aneinanderlegen und Verschweißen eines inneren Endes jeder Rotorwelle (3') mit einem freien Ende eines entsprechenden Wellenkupplungs-Vorsprunges (2b) durch dieses Bauteil (8).

2. Verfahren nach Anspruch 1, dadurch gekennzeichnet, daß das zwischengefügte Bauteil (8) austenitischen rostfreien Stahl umfaßt.

3. Verfahren nach Anspruch 1 oder 2, dadurch gekennzeichnet, daß die Verbindungsprozesse durch Elektronenstrahl- oder Reibschweißen ausgeführt werden.

4. Rotor für einen mechanisch angetriebenen Auflader, umfassend eine massive Rotortrommel (2a) aus einer Aluminiumlegierung und eine Rotorwelle (3') aus kohlenstoffhaltigem Stahl, die sich koaxial von jedem von deren Enden erstreckt, dadurch gekennzeichnet, daß die Rotortrommel (2a) an jedem Ende einen mit ihr fest verbundenen koaxialen Wellenkupplungs-Vorsprung (2b) aufweist, und daß ein Ende einer entsprechenden Rotorwelle (3') mit dem freien Ende jedes Wellenkupplungs-Vorsprunges (2b) verbunden ist, wobei der lineare thermische Ausdehnungskoeffizient der Rotorwellen (3') niedriger ist als der der Rotortrommel (2a) und wobei ein Bauteil (8) mit einem linearen thermischen Ausdehnungskoeffizienten, der zwischen denen des Wellenkupplungs-Vorsprungs (2b) und der Rotorwellen (3') liegt, zwischen jedem Wellenkupplungs-Vorsprung (2b) und der zugeordneten Rotorwelle (3') eingesetzt und mit dieser durch Schweißen verbunden ist.

5. Rotor nach Anspruch 4, dadurch gekennzeichnet, daß das zwischengesetzte Bauteil (8) austenitischen, rostfreien Stahl umfaßt.

## Revendications

1. Procédé de fabrication d'un rotor pour un compresseur de suralimentation à commande mécanique, comprenant les étapes consistant à fabriquer un corps de rotor en alliage d'aluminium, le corps de rotor (2a) étant plein et comportant une paire de saillies intégrales de raccordement d'arbre (2b) s'étendant de façon coaxiale l'une à l'autre à partir de surfaces d'extrémité respectives du corps de rotor, à fabriquer une paire de courts arbres de rotor (3') faits d'acier au carbone, le coefficient de dilatation thermique linéaire desdits arbres de rotor (3') étant inférieur à celui dudit corps de rotor (2a), à interposer un élément (8) entre chaque saillie de raccordement d'arbre (2b) et son arbre de rotor associé (3'), le coefficient de dilatation thermique linéaire dudit élément (8) étant compris entre ceux de chaque saillie de raccordement d'arbre (2b) et de son arbre de rotor associé (3'), et à placer bout à bout et à réunir par soudage une extrémité intérieure de chaque arbre de rotor (3') à une extrémité libre d'une saillie respective de raccordement d'arbre (2b) par l'intermédiaire dudit élément (8).

2. Procédé selon la revendication 1, dans lequel ledit élément interposé (8) est constitué d'acier inoxydable austénitique.

3. Procédé selon la revendication 1 ou la revendication 2, caractérisé en ce que les processus de raccordement sont effectués par soudage par faisceau d'électrons ou par soudage par friction.

4. Rotor destiné à un compresseur de suralimentation à commande mécanique, comprenant un corps de rotor (2a) plein en alliage d'aluminium et un arbre de rotor (3') en acier au carbone s'étendant de façon coaxiale à partir de chaque extrémité de celui-ci, caractérisé en ce que le corps de rotor (2a) comporte une saillie intégrale de raccordement coaxial d'arbre (2b) en alliage d'aluminium au niveau de chaque extrémité et en ce qu'une première extrémité d'un arbre de rotor respectif (3') est raccordée à l'extrémité libre de chaque saillie de raccordement d'arbre (2b), le coefficient de dilatation thermique linéaire desdits arbres de rotor (3') étant inférieur à celui dudit corps de rotor (2a), un élément (8) présentant un coefficient de dilatation thermique linéaire qui est compris entre ceux de la saillie de raccordement d'arbre (2b) et des arbres de rotor (3') étant interposé entre chaque saillie de raccordement d'arbre (2b) et l'arbre de rotor associé (3') et étant réuni à ceux-ci par soudage.

5. Rotor selon la revendication 4, caractérisé en ce que ledit élément interposé (8) est constitué d'acier inoxydable austénitique.
